# EUROPÄISCHE PATENTANMELDUNG

(11) **EP 4 403 679 A1**
(43) Veröffentlichungstag der Anmeldung: **24.07.2024**
(21) Anmeldenummer: 23152494.3
(22) Anmeldetag: 19.01.2023
(51) Int. Cl.: D01F 6/60, D01F 6/62, D01F 13/04, C10G 1/10

(54) **VERFAHREN UND VORRICHTUNG ZUR HERSTELLUNG EINES TEXTILEN TRÄGERS**

(71) Anmelder: Certoplast Technische Klebebänder GmbH, 42285 Wuppertal (DE)
(72) Erfinder: LEERMANN, Timo, 42369 Wuppertal (DE); RAMBUSCH, Réné, 42113 Wuppertal (DE)
(74) Vertreter: Andrejewski - Honke Patent- und Rechtsanwälte Partnerschaft mbB

(57) **Zusammenfassung**

Gegenstand der Erfindung ist ein Verfahren zur Herstellung eines textilen Trägers auf Basis von Kunststofffasern und/oder Kunststofffäden als Bestandteil eines Klebebandes. Dabei basieren die Kunststofffasern und/oder Kunststofffäden zumindest teilweise auf Rohstoffen aus der Aufbereitung von Kunststoffabfällen. Erfindungsgemäß werden die Rohstoffe durch thermischchemische Umwandlung der Kunststoffabfälle gewonnen.

## Beschreibung

Die Erfindung betrifft ein Verfahren zur Herstellung eines textilen Trägers auf Basis von Kunststofffasern und/oder Kunststofffäden als Bestandteil eines Klebebandes, wonach die Kunststofffasern und/oder Kunststofffäden zumindest teilweise auf Rohstoffen aus der Aufbereitung von Kunststoffabfällen basieren.

Ein Klebeband und insbesondere Wickelband zum Ummanteln von Kabeln in Automobilen ist durch die DE 20 2021 106 836 U1 der Anmelderin bekannt. Die an dieser Stelle eingesetzten Kunststofffasern und/oder Kunststofffäden werden zumindest teilweise auf Basis eines aus der Aufbereitung von Kunststoffhohlkörpern gewonnenen Kunststoffrezyklates hergestellt. Bei den Kunststoffhohlkörpern handelt es sich insbesondere um PET (Polyethylentherephthalat)-Flaschen. D.h., für die rezyklierten Kunststofffasern und/oder Kunststofffäden werden im Wesentlichen sogenannte Flakes genutzt, die der Aufbereitung von PET-Flaschen entstammen. Die Flakes werden dazu aufgeschmolzen und zu den Fasern bzw. Fäden oder auch den einzelnen Filamenten extrudiert. Das kann zusätzlich unter Rückgriff auf Neukunststoff (virgin) vorgenommen werden.

Bei einem ähnlichen Klebeband entsprechend der DE 20 2019 100 588 U1 der Anmelderin wird der textile Träger zumindest teilweise unter Rückgriff auf biobasierte Polymere hergestellt. Dazu wird auf biobasierte Polymerfasern und/oder Polymerfäden zurückgegriffen. Diese können durch Extrusion hergestellt werden. Die biobasierten Polymere entstammen ihrerseits nachwachsenden Rohstoffen auf Basis pflanzlicher Materialien. Dabei können beispielsweise Pflanzen oder auch Milchsäure eingesetzt werden.

Der Stand der Technik hat sich grundsätzlich bewährt, was die ressourcenschonende Herstellung von Klebebändern und insbesondere ihres textilen Trägers angeht. Denn biobasierte Polymere werden unter Rückgriff auf nachwachsende Rohstoffe hergestellt, wohingegen für die Kunststofffasern und/oder Kunststofffäden nach der gattungsbildenden DE 20 2021 106 836 U1 auf im Kreislauf geführte und aufbereitete Kunststoffabfälle insbesondere aus der Aufbereitung von PET-Flaschen zurückgegriffen wird. Das setzt allerdings voraus, dass die fraglichen PET-Flaschen nicht mit anderen Kunststoffen gemischt werden, wie dies bei beispielsweise Mischkunststoffabfällen der Fall ist.

Liegt eine Kunststoffmischung vor, sind meistens aufwendige Trennverfahren erforderlich, die Sortenreinheit zwar in Spezialfällen zulassen.

D.h., beim gattungsbildenden Stand der Technik wird ein sogenanntes stoffliches Recycling vorgenommen und werden spezielle Altkunststoffe zu neuen Kunststoffrohstoffen, dem sogenannten Regranulat, verarbeitet. Die auf diese Weise erzeugten Flakes werden dann zu den rezyklierten Kunststofffasern bzw. Kunststofffäden weiterverarbeitet. Der chemische Aufbau des Werkstoffes bleibt dabei praktisch unverändert erhalten.

Zwar lassen sich solche Mischkunststoffabfälle ohne Trennung in einzelne Kunststoffbestandteile grundsätzlich wiederverwerten. Allerdings zielen die bisherigen Vorgehensweisen zur Wiederverwertung meistens darauf ab, im Wesentlichen den Energiegehalt der Mischkunststoffabfälle für die Energieerzeugung und insbesondere Stromerzeugung zu nutzen. Das ist insofern problematisch, als hierbei CO₂ entsteht und man grundsätzlich bestrebt ist, die CO₂-Emissionen zu verringern. Hier will die Erfindung insgesamt Abhilfe schaffen.

Der Erfindung liegt das technische Problem zugrunde, ein derartiges Verfahren und eine zugehörige Vorrichtung so weiterzuentwickeln, dass grundsätzlich auch Mischkunststoffabfälle oder sogar auch andere organische Abfälle genutzt werden können.

Zur Lösung dieser technischen Problemstellung schlägt die Erfindung bei einem gattungsgemäßen Verfahren zur Herstellung eines textilen Trägers vor, dass die Rohstoffe durch thermisch-chemische Umwandlung der Kunststoffabfälle gewonnen werden.

D. h., erfindungsgemäß wird das Klebeband und insbesondere der textile Träger des Klebebandes auf Basis der Kunststofffasern und/oder Kunststofffäden nach wie vor und unverändert zumindest teilweise aus den Rohstoffen hergestellt, die aus der Aufbereitung von Kunststoffabfällen resultieren. Dazu werden die Kunststoffabfälle erfindungsgemäß der thermisch-chemischen Umwandlung unterzogen.

Im Gegensatz zum bisherigen und gattungsbildenden Stand der Technik nach der DE 20 2021 106 836 U1 kommt es also zunächst einmal zu der bereits beschriebenen thermisch-chemischen Umwandlung von generell organischen Abfallstoffen bzw. Kunststoffabfällen. Dadurch handelt es sich bei dem erfindungsgemäß gewonnenen Rohstoff nicht um ein Regranulat in obigem Sinne, sondern ist der Rohstoff komplett aus Kunststoffabfällen gewonnen worden, die dazu größtenteils in ihre Monomere aufgespalten werden und folglich kein Regranulat im obigen Sinne darstellen.

Dadurch entfällt eine spezifische und getrennte Kreislaufführung der PET-Flaschen wie bei der gattungsbildenden Lehre, die dann ihrerseits mechanisch durch beispielsweise Schreddern aufbereitet und zu den Flakes bzw. dem Regranulat weiterverarbeitet werden, die dann ihrerseits als Extrudat für die Herstellung der Kunststofffasern bzw. Kunststofffäden dienen. Vielmehr geht die Erfindung so vor, dass generell praktisch jegliche organische Abfallstoffe bzw. Kunststoffabfälle thermisch-chemisch umgewandelt werden. Die thermisch-chemische Umwandlung erfolgt dabei weitgehend unter Ausschluss von Sauerstoff, um etwaige Explosionen oder generell Verbrennungsprozesse zu vermeiden. Meistens handelt es sich bei der thermisch-chemischen Umwandlung um eine Pyrolyse, also einen Zersetzungsprozess bei hohen Temperaturen und unter weitgehendem Ausschluss von Sauerstoff, welcher darauf abzielt, die chemischen Bindungen in den organischen Abfallstoffen bzw. Kunststoffabfälle aufzuspalten. Der an dieser Stelle zusätzlich vorliegende Sauerstoffmangel verhindert dabei eine Verbrennung.

Bei der thermisch-chemischen Umwandlung der organischen Abfallstoffe bzw. der Pyrolyse entstehen sowohl gasförmige, flüssige als auch feste Produkte des bei der Pyrolyse gewonnenen Produktgemisches. Erfindungsgemäß wird dabei die Auslegung so getroffen, dass das bei der Pyrolyse gewonnene Produktgemisch überwiegend flüssige Bestandteile, also Pyrolyseöl, aufweist. Das lässt sich im Regelfall durch eine sogenannte schnelle Pyrolyse bei Temperaturen von um die 500 °C bei einer geringen Verweildauer der organischen Abfallstoffe bzw. Kunststoffabfälle von weniger als 10 Sekunden in einem Reaktor erreichen. Denn dann ist der Anteil an gewonnenem Pyrolyseöl besonders hoch, kann im Vergleich zur Masse der eingangsseitig eingebrachten organischen Abfallstoffe bzw. Kunststoffabfälle in der Regel mehr als 50 M-% und meistens sogar mehr als 60 M-% und insbesondere sogar 70 M-% und mehr betragen.

Grundsätzlich wird die thermisch-chemische Umwandlung der organischen Abfallstoffe bzw. Kunststoffabfälle generell bei Temperaturen im Bereich von ca. 300 °C bis ca. 700 °C durchgeführt. Dabei kommt meistens ein Reaktor zum Einsatz, welcher mit den organischen Abfallstoffen bzw. Kunststoffabfällen über sogenannte Zellradschleusen beschickt wird und derartige Zellradschleusen auch für die Abfuhr der solchermaßen behandelten Abfallstoffe sorgen. Solche Zellradschleusen gewährleisten eine nahezu vollständige Abdichtung gegenüber der Atmosphäre, so dass über die Umgebungsluft kein Sauerstoff in den Reaktor eindringen kann. Dadurch lässt sich eine etwaige Explosionsgefahr ausschließen und lassen sich auch schädliche Verbrennungsprozesse vermeiden.

Das auf diese Weise primär gewonnene Pyrolyseöl aus dem durch Pyrolyse der Abfallstoffe bzw. Kunststoffe gewonnenen Produktgemisch wird nun erfindungsgemäß eingesetzt, die Kunststofffasern und/oder Kunststofffäden herzustellen. Dazu kann beispielsweise das Pyrolyseöl zusammen mit fossilem Öl unter Anwendung des sogenannten Massebilanz-Prinzips zur Herstellung der Kunststofffasern und/oder Kunststofffäden eingesetzt werden. In diesem Zusammenhang wird das Pyrolyseöl ebenso wie fossiles Öl typischerweise zunächst destilliert, anschließend erhitzt und gespalten ("Cracken") und schließlich zu Pellets bzw. Granulat verarbeitet. Dabei kommen nachfolgende Reaktionsprozesse wie z.B. eine Polymerisation, Polykondensation oder auch Polyaddition zum Tragen. D.h., die Verarbeitung des Pyrolyseöls kann prinzipiell vergleichbar dem fossilen Öl erfolgen, so dass als Ausgangsprodukt ein entsprechendes Kunststoffgranulat zur Verfügung steht, welches seinerseits durch Aufschmelzen und Extrudieren nach bekannten Verfahren zu den Kunststofffasern bzw. Kunststofffäden und damit dem textilen Träger weiterverarbeitet werden kann.

In diesem Zusammenhang kann das Pyrolyseöl mit einem Masseanteil von bis zu 100 M-% eingesetzt werden. D.h., das Pyrolyseöl lässt sich praktisch vollständig destillieren, cracken und anschließend durch Polymerisation, Polykondensation oder Polyaddition zu dem Kunststoffgranulat weiterverarbeiten, welches dann seinerseits die Basis für die Herstellung der Kunststofffasern bzw. Kunststofffäden und damit den textilen Träger des erfindungsgemäßen Klebebandes bildet. Das an dieser Stelle und einleitend bereits angesprochene Massebilanz-Prinzip drückt dabei aus, dass als Rohstoff für die Herstellung der Kunststofffasern und/oder Kunststofffäden des textilen Trägers bei dem erfindungsgemäßen Klebeband prinzipiell sowohl das Pyrolyseöl als auch fossiles Öl genutzt werden können, während die Produktqualität und Eigenschaften der solchermaßen erzeugten Kunststofffasern bzw. Kunststofffäden gleichbleiben. Je größer der Anteil an Pyrolyseöl (bis zu 100 M-%) ist, umso mehr verbessert sich die Umweltbilanz und sinkt auch der sogenannte CO₂-Fußabdruck des hergestellten Produktes. Das gilt insbesondere für den Fall, dass vollständig mit dem Pyrolyseöl zur Herstellung der Kunststofffasern bzw. Kunststofffäden für den textilen Träger des erfindungsgemäßen Klebebandes gearbeitet wird, was prinzipiell möglich ist.

Das heißt, sofern im Rahmen des geltenden Anspruches 6 das Pyrolyseöl in einem Masseanteil von bis 100 M-% dem fossilen Öl beigemischt wird, bedeutet dies, dass das Pyrolyseöl das fossile Öl als Rohstoff für die Herstellung der Kunststofffasern und/oder Kunststofffäden ganz oder teilweise ersetzt. Tatsächlich korrespondiert ein Anteil von 100 M-% Pyrolyseöl dazu, dass die fraglichen Kunststofffasern und/oder Kunststofffäden vollständig aus dem Pyrolyseöl hergestellt werden und es in diesem Zusammenhang einer zusätzlichen Beimischung von fossilem Öl nicht bedarf.

Die eingesetzten Kunststoffabfälle zur Herstellung der Kunststofffasern und/oder Kunststofffäden können dabei erfindungsgemäß aus der Aufbereitung von Altreifen und/oder Mischkunststoffabfällen gewonnen werden. In diesem Zusammenhang ist es denkbar, dass die Kunststofffasern und/oder Kunststofffäden generell aus einem aufbereiteten Kunststoff auf Basis von Pyrolyseöl aus Altreifen hergestellt sind bzw. werden. Bei dem fraglichen Kunststoff kann es sich beispielhaft um ein Compound und insbesondere PA (Polyamid)-Compound handeln. Grundsätzlich lassen sich auch andere Kunststoffe wie beispielsweise PET (Polyethylentherephthalat) auf diese Weise aus dem Pyrolyseöl aus Altreifen produzieren. Anstelle der Altreifen können selbstverständlich auch andere organische Kunststoffabfallstoffe wie die zuvor bereits angesprochenen Mischkunststoffabfälle zur Anwendung kommen. Entscheidend ist der Umstand, dass durch die thermische-chemisch Umwandlung der Kunststoffabfälle und/oder Altreifen das Pyrolyseöl gewonnen wird, welches dann in einem herkömmlichen Herstellungsvorgang gegebenenfalls zusammen mit fossilem Öl zu einem Kunststoffgranulat weiterverarbeitet wird, dass dann seinerseits für die Herstellung der Kunststofffasern und/oder Kunststofffäden genutzt wird.

Darüber hinaus eröffnet die Erfindung die Möglichkeit, die Kunststofffasern und/oder Kunststofffäden auf Basis der Rohstoffe aus der Aufbereitung von Kunststoffabfällen zusammen mit biobasierten Polymerfasern und/oder Polymerfäden für die Herstellung des textilen Trägers als Basis für das Klebeband zu nutzen. Dadurch wird eine besonders ressourcenschonende Herstellung gewährleistet. In jedem Fall verfügt das erfindungsgemäße Klebeband über vergleichbare Eigenschaften wie Klebebänder, bei denen die fraglichen Kunststofffasern bzw. Kunststofffäden ausschließlich erdölbasiert produziert wurden. Das gilt sowohl für die Temperaturbeständigkeit als auch für die mechanischen Eigenschaften.

Tatsächlich weist das erfindungsgemäße Klebeband meistens eine Temperaturbeständigkeit zumindest der Temperaturklasse T2 nach LV 312 (10/2009) auf. In diesem Zusammenhang drückt die Temperaturklasse T2 wie allgemein üblich aus, dass die ummantelten Kabel und ihre Kabelisolierung durch den Einfluss des Klebebandes in Kombination mit der erhöhten Temperatur von 105 °C ohne Versprödung über eine Dauer von 3000 Stunden standhalten. Grundsätzlich kann aber auch die Temperaturklasse T3 erreicht werden, welche dann zu einer erhöhten Temperatur von 125 °C ohne Versprödung über die Dauer von 3000 Stunden im Minimum korrespondiert. Verwiesen wird hierzu und zur Erläuterung beispielhaft auf die EP 2 522 705 B1.

Darüber hinaus verfügt das erfindungsgemäße Klebeband über mechanische Eigenschaften, die lediglich und im Maximum um 20%, meistens sogar um maximal 10% von denjenigen Eigenschaften bei Klebebändern abweichen, deren Kunststofffasern bzw. Kunststofffäden vollständig aus Neumaterial bzw. erdölbasiert bei ansonsten gleichem Aufbau hergestellt sind.

Bei den zuvor angesprochenen und übereinstimmenden mechanischen Eigenschaften handelt es sich in der Regel um die Abriebbeständigkeit und die hiermit verbundenen Abriebklassen nach der zuvor bereits genannten Norm LV 312 (10/2009). Dazu sei auf die DE 20 2014 011 328 U1 hingewiesen. Die zuvor bereits angesprochene Abweichung von im Maximum 20% und vorzugsweise maximal 10% bei gleichem Aufbau bedeutet nun, dass beispielsweise die für das Klebeband auf Basis des erdölbasierten Kunststoffes erreichte Abriebklasse überwiegend beibehalten wird bzw. allenfalls eine Reduzierung um eine Abriebklasse bei dem erfindungsgemäßen Klebeband mit den Kunststofffasern bzw. Kunststofffäden auf der Basis von Pyrolyseöl gleichen Aufbaus beobachtet wird. Außerdem können solche maximalen Abweichungen im Hinblick beispielsweise auf die Reißdehnung oder auch die Reißfestigkeit sowie Luftdurchlässigkeit beobachtet werden, wie dies ganz generell im gattungsbildenden Stand der Technik nach der DE 20 2021 106 836 U1 prinzipiell beschrieben wird.

Bei dem textilen Träger aus den Kunststofffasern bzw. Kunststofffäden basierend auf Rohstoffen aus der Aufbereitung von Kunststoffabfällen handelt es sich vorteilhaft um ein Vlies, ein Gewebe, ein Gewirke, ein Gestricke einzeln oder in Kombination. Anders ausgedrückt, kann der textile Träger sowohl einlagig bzw. einschichtig als auch mehrlagig bzw. mehrschichtig ausgelegt sein. In letztgenanntem Fall ist es denkbar, dass beispielsweise ein Vliesträger mit einem Gewebeträger kombiniert wird. Grundsätzlich kann der textile Träger zusätzlich auch mit einer ein- oder beidseitigen Kunststoffbeschichtung ausgerüstet werden. In diesem Zusammenhang haben sich beispielsweise Rückseitenbeschichtungen gegenüberliegend der Klebebeschichtung als besonders günstig erwiesen, um ein etwaiges Anhaften der Klebebeschichtung beim Aufrollen des Klebebandes am textilen Träger zu vermeiden.

Gegenstand der Erfindung ist auch ein langgestrecktes Gut wie insbesondere ein Kabelsatz, der mit dem fraglichen Klebeband ummantelt ist. Dabei kann das Klebeband zur Herstellung des langgestreckten Gutes grundsätzlich als Längsumschlag um das Gut bzw. den Kabelsatz in Längsrichtung herumgeschlagen werden. Genauso gut ist es aber auch denkbar und wird von der Erfindung umfasst, dass zur Herstellung des langgestreckten Gutes das Klebeband wendelförmig bzw. spiralförmig um die Kabel des Kabelsatzes herumgewickelt wird.

Gegenstand der Erfindung ist auch eine Vorrichtung zur Herstellung eines textilen Träger, wie sie im nebengeordneten Anspruch 11 beschrieben wird. Besagte Vorrichtung ist insbesondere zur Durchführung des zuvor bereits beschriebenen Verfahrens geeignet. Außerdem steht ausgangsseitig der Vorrichtung das zusätzlich geschützte Klebeband nach dem Anspruch 12 zur Verfügung.

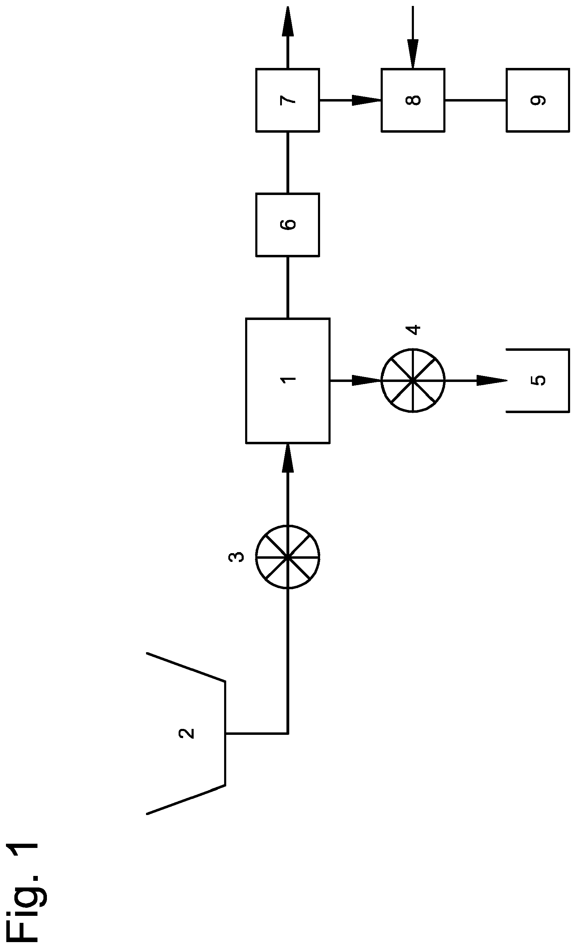

Im Rahmen der nachfolgend wiedergegebenen Fig. 1 wird ganz generell eine Anlage zur Herstellung des textilen Trägers für das erfindungsgemäße Klebeband wiedergegeben. Solche Anlagen sind prinzipiell beispielsweise für die Aufbereitung von Automobilreifen und die Gewinnung von gasförmigen und flüssigen Kohlenwasserstoffen schon seit langem bekannt, wozu auf die DE 24 62 495 A1 hingewiesen sei. Ebenfalls einschlägig ist hier der weitere Stand der Technik nach der DE 10 2007 056 907 A1, welcher sich mit einer Anlage und einem Verfahren zur thermischen Behandlung von Abfallstoffen beschäftigt.

In der Fig. 1 ist ganz generell ein Reaktor 1 dargestellt, welcher zur Aufbereitung von organischen Abfallstoffen dient. Nach dem Ausführungsbeispiel werden in dem Reaktor 1 hauptsächlich Altreifen sowie Misch-Kunststoffabfälle aufbereitet. Dazu ist eine Zuführung 2 vorgesehen, mit deren Hilfe die fraglichen organischen Abfallstoffe unter Zwischenschaltung einer Zellradschleuse 3 dem fraglichen Reaktor 1 zugeführt werden. Mit Hilfe einer weiteren Zellradschleuse 4 werden die behandelten Abfallstoffe in eine Aufbereitung bzw. einen Sammelbehälter 5 abgegeben. Der Reaktor 1 ist mit einer Heizeinrichtung ausgerüstet, die im Innern die gewünschten Temperaturen für die thermisch-chemische Umwandlung bzw. Pyrolyse von beispielsweise 300 °C bis 800 °C erzeugen.

Auf diese Weise entsteht ein Dampf ausgangsseitig des Reaktors 1, der über einen Kondensator 6 weiter zu einem Ölabscheider 7 geführt wird. Im Ölabscheider 7 kann das auf diese Weise kondensierte Pyrolyseöl beispielsweise von ebenfalls anfallendem Wasser getrennt werden, wie dies durch einen Pfeil angedeutet ist.

In der Regel stellt dieser Teil der dargestellten Vorrichtung einen separaten Bestandteil dar. D. h., die einzelnen Vorrichtungselemente sind in der Regel nicht örtlich und zeitlich zusammengefasst, sondern können zeitlich und örtlich getrennt voneinander betrieben werden.

Das ausgangsseitig des Ölabscheiders 7 zur Verfügung stehende Pyrolyseöl mag nun mit fossilem Öl bzw. Erdöl in einer Kammer 8 gemischt werden. Das deutet der in die Kammer bzw. Mischkammer 8 mündende Pfeil an, der den Zufluss von Erdöl wiedergibt. Anschließend an diese Kammer bzw. Mischkammer 8 erfolgt der eigentliche Prozess der Kunststoffherstellung 9, welcher ganz prinzipiell die zuvor bereits angesprochenen einzelnen Herstellungsschritte der Destillation, des Crackens, der Polymerisation, Polykondensation oder Polyaddition und schließlich die Produktion von Kunststoffgranulat ausgangsseitig umfasst.

Das auf diese Weise hergestellte Kunststoffgranulat wird anschließend extrudiert und zu den recycelten Kunststofffasern bzw. Kunststofffäden verarbeitet, die dann ihrerseits in bekannten Textilverarbeitungsprozessen zu beispielsweise einem Vlies als Trägermaterial, einem Gewebe oder auch Kombinationen weiterverarbeitet werden. Der solchermaßen hergestellte textile Träger wird anschließend mit einer Klebebeschichtung ausgerüstet, die beispielsweise als Heißschmelzklebstoff bzw. Haftschmelzklebstoff über eine Düse auf den textilen Träger aufgebracht wird. Dabei kann der Heißschmelzklebstoff bzw. Haftschmelzklebstoff anschließend UV-vernetzt werden.

## Patentansprüche

1. Verfahren zur Herstellung eines textilen Trägers auf Basis von Kunststofffasern und/oder Kunststofffäden als Bestandteil eines Klebebandes, wonach die Kunststofffasern und/oder Kunststofffäden zumindest teilweise auf Rohstoffen aus der Aufbereitung von Kunststoffabfällen basieren,
**dadurch gekennzeichnet, dass**
die Rohstoffe durch thermisch-chemische Umwandlung der Kunststoffabfälle gewonnen werden.

2. Verfahren nach Anspruch 1, **dadurch gekennzeichnet, dass** die thermisch-chemische Umwandlung weitgehend unter Ausschluss von Sauerstoff erfolgt.

3. Verfahren nach Anspruch 1 oder 2, **dadurch gekennzeichnet, dass** die thermisch-chemische Umwandlung als Pyrolyse ausgebildet ist.

4. Verfahren nach Anspruch 3, **dadurch gekennzeichnet, dass** das bei der Pyrolyse gewonnene Produktgemisch überwiegend Pyrolyseöl als Rohstoff für die Herstellung der Kunststofffasern und/oder Kunststofffäden aufweist.

5. Verfahren nach Anspruch 4, **dadurch gekennzeichnet, dass** das Pyrolyseöl zusammen mit fossilem Öl unter Anwendung des Massebilanz-Prinzips zur Herstellung der Kunstofffasern und/oder Kunststofffäden eingesetzt wird.

6. Verfahren nach Anspruch 4 oder 5, **dadurch gekennzeichnet, dass** das Pyrolyseöl in einem Masseanteil von bis zu 100 Masse-% dem fossilen Öl beigemischt wird.

7. Verfahren nach einem der Ansprüche 4 bis 6, **dadurch gekennzeichnet, dass** das Pyrolyseöl aus der Aufbereitung von Altreifen und/oder Mischkunststoffabfällen gewonnen wird.

8. Verfahren nach einem der Ansprüche 1 bis 7, **dadurch gekennzeichnet, dass** der textile Träger neben den Kunststofffasern und/oder Kunststofffäden auf Basis der Rohstoffe aus der Aufbereitung von Kunststoffabfällen zusätzlich biobasierte Polymerfasern und/oder Polymerfäden aufweist.

9. Verfahren nach einem der Ansprüche 1 bis 8, **dadurch gekennzeichnet, dass** der textile Träger ganz oder teilweise mit einem Klebstoff, insbesondere einem Haftklebstoff und vorzugsweise einem UV-vernetzbaren Haftschmelzklebstoff, beschichtet wird.

10. Verfahren nach Anspruch 9, **dadurch gekennzeichnet, dass** der mit dem Klebstoff beschichtete Träger als Kabelwickelband wendelförmig oder als Längsumschlag um zu ummantelndes Gut, insbesondere Kabel in Automobilen, herumgeführt wird.

11. Vorrichtung zur Herstellung eines textilen Trägers auf Basis von Kunststofffasern und/oder Kunststofffäden als Bestandteil eines Klebebandes, vorzugsweise zur Durchführung des Verfahrens nach einem der Ansprüche 1 bis 10, mit einer Kunststoffabfälle aufnehmenden Zuführung (2) für einen Reaktor (1), wobei der Reaktor (1) mit einer Heizeinrichtung zur thermisch-chemischen Umwandlung der Kunststoffabfälle ausgerüstet ist, und mit einer dem Reaktor (1) folgende Mischkammer (8), in welcher der ausgangsseitig des Reaktors (1) zur Verfügung gestellte flüssige Rohstoff, insbesondere Pyrolyseöl, gegebenenfalls mit fossilem Öl gemischt und anschließend einer Kunststoffaufbereitung (9) zur Herstellung von Kunststoffgranulat zugeführt und das Kunststoffgranulat abschließend zu dem textilen Träger verarbeitet sowie gegebenenfalls mit der Klebebeschichtung ausgerüstet wird.

12. Klebeband, insbesondere Wickelband zur Ummantelung von Kabeln in Automobilen, hergestellt nach dem Verfahren gemäß der Ansprüche 1 bis 10, mit einem textilen Träger auf Basis von Kunststofffasern und/oder Kunststofffäden, und mit einer ein- oder beidseitig aufgebrachten Klebebeschichtung, wobei die Kunststofffasern und/oder Kunststofffäden zumindest teilweise auf Rohstoffen aus der Aufbereitung von Kunststoffabfällen basieren,
**dadurch gekennzeichnet, dass**
die Rohstoffe der thermisch-chemischen Umwandlung der Kunststoffabfälle entstammen.

13. Klebeband nach Anspruch 12, **dadurch gekennzeichnet, dass** der textile Träger neben den Kunststofffasern und/oder Kunststofffäden basierend auf Rohstoffen aus der Aufbereitung von Kunststoffabfällen zusätzlich biobasierte Polymerfasern und/oder Polymerfäden aufweist.

14. Klebeband nach Anspruch 12 oder 13, **dadurch gekennzeichnet, dass** als textiler Träger ein Vlies, Gewebe, Gewirke, Gestricke einzeln oder in Kombination zum Einsatz kommt.

15. Langgestrecktes Gut, insbesondere Kabelsatz, ummantelt mit einem Klebeband nach einem der Ansprüche 12 bis 14.

## Geänderte Patentansprüche

### Geänderte Patentansprüche gemäss Regel 137(2) EPÜ.

1. Verwendung von Rohstoffen aus der Aufbereitung von Kunststoffabfällen durch thermisch-chemische Umwandlung der Kunststoffabfälle, wobei die Rohstoffe komplett aus Kunststoffabfällen gewonnen und dazu größtenteils in ihre Monomere aufgespalten werden, und wobei zumindest teilweise auf den Rohstoffen basierende Kunststofffasern und/oder Kunststofffäden zur Herstellung eines textilen Trägers als Bestandteil eines Klebebands zur Verwendung als Wickelband zur Ummantelung von Kabeln in Automobilen eingesetzt werden.

2. Verwendung nach Anspruch 1, **dadurch gekennzeichnet, dass** die thermisch-chemische Umwandlung weitgehend unter Ausschluss von Sauerstoff erfolgt.

3. Verwendung nach Anspruch 1 oder 2, **dadurch gekennzeichnet, dass** die thermisch-chemische Umwandlung als Pyrolyse ausgebildet ist.

4. Verwendung nach Anspruch 3, **dadurch gekennzeichnet, dass** das bei der Pyrolyse gewonnene Produktgemisch überwiegend Pyrolyseöl als Rohstoff für die Herstellung der Kunststofffasern und/oder Kunststofffäden aufweist.

5. Verwendung nach Anspruch 4, **dadurch gekennzeichnet, dass** das Pyrolyseöl zusammen mit fossilem Öl unter Anwendung des Massebilanz-Prinzips zur Herstellung der Kunstofffasern und/oder Kunststofffäden eingesetzt wird.

6. Verwendung nach Anspruch 4 oder 5, **dadurch gekennzeichnet, dass** das Pyrolyseöl in einem Masseanteil von bis zu 100 Masse-% dem fossilen Öl beigemischt wird.

7. Verwendung nach einem der Ansprüche 4 bis 6, **dadurch gekennzeichnet, dass** das Pyrolyseöl aus der Aufbereitung von Altreifen und/oder Mischkunststoffabfällen gewonnen wird.

8. Verwendung nach einem der Ansprüche 1 bis 7, **dadurch gekennzeichnet, dass** der textile Träger neben den Kunststofffasern und/oder Kunststofffäden auf Basis der Rohstoffe aus der Aufbereitung von Kunststoffabfällen zusätzlich biobasierte Polymerfasern und/oder Polymerfäden aufweist.

9. Verwendung nach einem der Ansprüche 1 bis 8, **dadurch gekennzeichnet, dass** der textile Träger ganz oder teilweise mit einem Klebstoff, insbesondere einem Haftklebstoff und vorzugsweise einem UV-vernetzbaren Haftschmelzklebstoff, beschichtet wird.

10. Verwendung nach Anspruch 9, **dadurch gekennzeichnet, dass** der mit dem Klebstoff beschichtete Träger als Kabelwickelband wendelförmig oder als Längsumschlag um zu ummantelndes Gut, insbesondere Kabel in Automobilen, herumgeführt wird.

11. Verwendung nach Anspruch 1 bis 10, **dadurch gekennzeichnet, dass** der textile Träger neben den Kunststofffasern und/oder Kunststofffäden basierend auf Rohstoffen aus der Aufbereitung von Kunststoffabfällen zusätzlich biobasierte Polymerfasern und/oder Polymerfäden aufweist.

12. Verwendung nach Anspruch 1 bis 11, **dadurch gekennzeichnet, dass** als textiler Träger ein Vlies, Gewebe, Gewirke, Gestricke einzeln oder in Kombination zum Einsatz kommt.

13. Langgestrecktes Gut, insbesondere Kabelsatz, ummantelt unter Verwendung eines Klebebands nach einem der Ansprüche 1 bis 12.

14. Vorrichtung zur Verwendung von Rohstoffen aus der Aufbereitung von Kunststoffabfällen zur Herstellung eines textilen Trägers auf Basis von aus zumindest teilweise den Rohstoffen bestehenden Kunststofffasern und/oder Kunststofffäden als Bestandteil eines Klebebandes, vorzugsweise zur Verwendung nach einem der Ansprüche 1 bis 10, mit einer Kunststoffabfälle aufnehmenden Zuführung (2) für einen Reaktor (1), wobei der Reaktor (1) mit einer Heizeinrichtung zur thermisch-chemischen Umwandlung der Kunststoffabfälle ausgerüstet ist, und mit einer dem Reaktor (1) folgende Mischkammer (8), in welcher der ausgangsseitig des Reaktors (1) zur Verfügung gestellte flüssige Rohstoff, insbesondere Pyrolyseöl, gegebenenfalls mit fossilem Öl gemischt und anschließend einer Kunststoffaufbereitung (9) zur Herstellung von Kunststoffgranulat zugeführt und das Kunststoffgranulat abschließend zu dem textilen Träger verarbeitet sowie gegebenenfalls mit der Klebebeschichtung ausgerüstet wird.
